Europäisches Patentamt

European Patent Office

Office européen des brevets

(11) Publication number: **0 357 570**
A2

# EUROPEAN PATENT APPLICATION

(21) Application number: 89850158.0

(22) Date of filing: 12.05.89

(51) Int. Cl.⁵: **B 62 D 43/02**

(30) Priority: 01.09.88 NO 883909

(43) Date of publication of application:
07.03.90 Bulletin 90/10

(84) Designated Contracting States:
AT DE ES FR GB GR IT NL SE

(71) Applicant: **Damm, Sverre**
**Gamleveien 1**
**N-1473 Skärer (NO)**

(72) Inventor: **Damm, Rune**
**Landskronaveien 74**
**N-2013 Skjetten (NO)**

(74) Representative: **Onn, Thorsten et al**
**AB Stockholms Patentbyra Zacco & Bruhn P.O. Box 3129**
**S-103 62 Stockholm (SE)**

(54) Spare wheel attachment assembly.

(57) Spare wheel attachement assembly for large motor vehicles, where one end of an arm (1) being turnably mounted to a shaft journal (12) arranged horizontally at the front end of the body (9) of the vehicle, whereby the shaft journal (12) being arranged in the longitudinal direction of the body (9), an outer telescopic arm (2) being arranged slideably on the arm (1) and being adapted for securing a spare wheel (11), a wire (5) being secured to the outer end of the telescopic arm (2), guided downwards between two pulleys (3, 4) secured to e.g. the front tail board (10) of the body (9), somewhat lower than the securement of the wire (5) to the telescopic arm (2) in the vertical position of the arm, and the wire (5) being guided from the pulleys (3, 4) to a winch (6) in the level of the body (9), whereby the winch (6) can be activated from the opposite side of the body (9).

Bundesdruckerei Berlin

## Description

## SPARE WHEEL ATTACHMENT ASSEMBLY

The present invention is related to a spare wheel attachement assembly for motor vehicles having wheels not to be handled manually.

Spare wheels for larger motor vehicles, such as large lorries, are secured to the truck body or possibly a separate body by means of different auxiliary devices such as lifting tackles or winches of different kinds. These wheels are very heavy so they cannot be mounted manually. The devices used today are relatively space consuming and the time consumption for mounting is comparatively long.

With the spare wheel attachement assembly according to the present invention is provided a device consuming a minimum of space, enabling lowering of the spare wheel and the preceeding mounting of the spare wheel very quickly and at the same time the operator is secured against possible unforeseen injuries as the operator during the operation is situated on the opposite side of the body in relation to the spare wheel. These advantages are achieved with the attachement assembly according to the invention, as defined by the features of the patent claims.

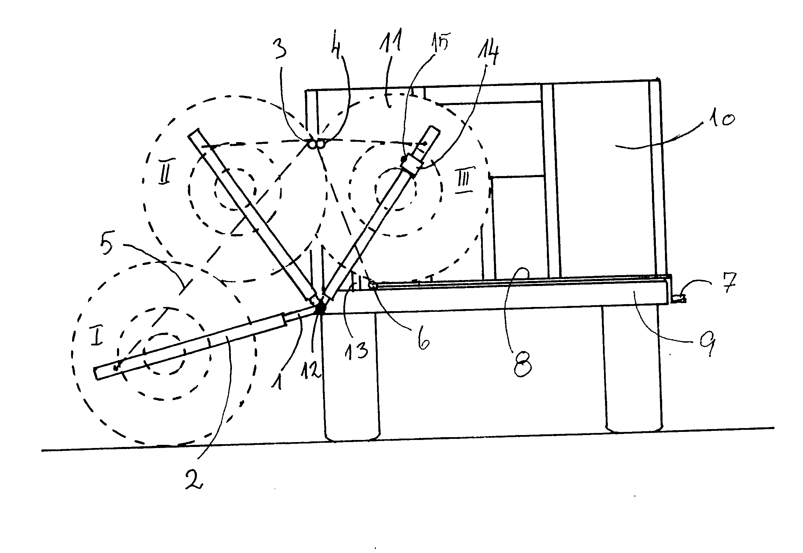

The drawing discloses a front view of a truck body where the attachement assembly is arranged at the front edge on the right side of the body and where the spare wheel as such is disclosed in broken lines for better clearity. The assembly is furthermore disclosed in three different positions.

A shaft journal 12 is secured to the front edge of a truck body 9, extending in the longitudinal direction of the body. The drawing discloses the shaft journal 12 secured to the right hand side of the body. A lever 1 is secured turnably to the shaft journal 12 in such a way that it can be turned in a plane perpendicularly to the longitudinal direction of the body 9. A telescopic arm 12 is arranged around the lever 1 which in the Figures II and III is disclosed in the retracted position, whereby I discloses the arm in a somewhat extended position.

The outer telescopic arm 2 is adapted for mounting a spare wheel 11 and a wire 5 is secured near the outer end of the arm 2. The wire 5 is guided from the telescopic arm 2 downwards between two pulleys 3 and 4 which arranged horizontally near and parallel to each other, and the wire 5 is further guided to preferably a winch 6 arranged on the body 9. The winch 6 is activated by a crank handle 7 arranged on the opposite side of the body 9, by means of a connection rod 8. The pulleys 3 and 4 are secured to the front tail board 10 at a level somewhat lower than the securement of the wire 5 to the telescopic arm 2.

when a spare wheel 11 is to be lifted in place, the spare wheel is mounted to the telescopic arm 2, whereby this is extended to a suitable length for securing the spare wheel to the arm 2. The winch 6 thereafter is activated by means of the crank handle 7 such that the wire 5 is pulled in and the telescopic arm 2 is pulled up after retracting to an abutment. In the position II the telescopic arm then will be completely retracted and the winch 6 is activated until the telescopic arm 2 substantially achieves its vertical position whereafter the spare wheel may be pushed manually across the neutral position for which very little forces needed. Thereafter wire 5 is given out from the winch by corresponding activation of the crank handle 7 until the spare wheel abuts against a bracket 13 secured to the body and the telescopic arm 2 simultaneously is received in a claw 14 secured to the front tail board 10. In this position the spare wheel 11 is secured partly by abutment against the bracket 13 by way of its own weight and partly by the securement of the telescopic arm 2 in the claw 14 which additionally may have a locking device 15 to secure that the telescopic arm 2 not unexpectedly may be moved out of the claw 14.

When bringing back the spare wheel 11, the locking device 15 first is released from the claw 14 whereafter the winch 6 is activated by means of the crank handle 7 in such a way that the wire 5 turns the telescopic arm 2 counter clockwise on the Figure, until the telescopic arm is substantially in a vertical position, whereafter the operator may push the spare wheel in such a way that the telescopic arm 2 is turned beyond the outside of the body and the crank handle 7 is activated to give after the wire 5 until the spare wheel 11 arrives the surface or possibly abuts against parts of the body in which case the telescopic arm 2 is extended until the spare wheel hits the surface as the spare wheel hereby is sliding along the body parts. The spare wheel thereafter is released from the telescopic arm and another wheel is mounted as described above.

## Claims

1. Spare wheel attachement assembly for large motor vehicles, CHARACTERIZED IN one end of an arm (1) being turnably mounted to a shaft journal (12) arranged horizontally at the front end of the body (9) of the vehicle, whereby the shaft journal (12) being arranged in the longitudinal direction of the body (9), an outer telescopic arm (2) being arranged slideably on the arm (1) and being adapted for securing a spare wheel (11), a wire (5) being secured to the outer end of the telescopic arm (2), guided downwards between two pulleys (3, 4) secured to e.g. the front tail board (10) of the body (9), somewhat lower than the securement of the wire (5) to the telescopic arm (2) in the vertical position of the arm, and the wire (5) being guided from the pulleys (3, 4) to a winch (6) in the level of the body (9), whereby the winch (6) can be activated from the opposite side of the body (9).

2. Assembly according to claim 1, CHARACTERIZED IN the winch (6) may be activated on the opposite side of the body (9) by a crank handle (7) by means of a connection rod (8).

3. Assembly according to claim 1-2, CHARACTERIZED IN the telescopic arm (2) in the driving position of the spare wheel (11) is captured by a claw (14) secured to the front tail board (10) of the body (9) and being lockable in this position, whereby the spare wheel (11) in the driving position substantially is resting on a bracket (17) connected with the body (9).